# EUROPEAN PATENT APPLICATION

(11) **EP 4 778 764 A1**
(43) Date of publication of application: **22.07.2026**
(21) Application number: 25227560.7
(22) Date of filing: 30.12.2025
(51) Int. Cl.: B60K 35/22, B60K 35/28, B60R 1/00, B60W 50/14, B62D 15/02

(54) **DRIVING SUPPORT DEVICE**

(30) Priority: 16.01.2025 JP 2025006043
(71) Applicant: AISIN CORPORATION, Aichi 448-8650 (JP)
(72) Inventor: YAMAMOTO, Kinji, Kariya, 448-8650 (JP); HACHISUKA, Ryo, Kariya, 448-8650 (JP)
(74) Representative: TBK

(57) **Abstract**

A driving support device (1) performing automatic control on at least part of driving operation of a vehicle (2), the driving support device (1) displaying, on a display device (4), a vehicle periphery image (40) indicating a periphery of the vehicle (2) and an expected course image (51) indicating an expected future course of the vehicle (2) in the vehicle periphery image (40), and changing, in association with driving operation under the automatic control for avoiding approach to an obstacle (55, 56) or a dividing line in the periphery of the vehicle (2), a display form on at least a side close to the obstacle (55, 56) or the dividing line to be avoided in the expected course image (51).

## Description

### TECHNICAL FIELD

The present disclosure relates to a driving support device that supports driving of a vehicle.

### BACKGROUND DISCUSSION

In recent years, there has been newly proposed an automated driving support system that assists driving of the vehicle by a user by executing part or all of the user's driving operation on the vehicle side as a travel mode of a vehicle, in addition to manual travel in which the vehicle travels on the basis of the user's driving operation. In the automated driving support system, for example, a current position of the vehicle, a lane on which the vehicle travels, and the position of another surrounding vehicle are detected as needed, and vehicle control such as controlling the steering, the drive source, or the brakes is automatically performed so as to travel along a preset route.

Here, in a case where an obstacle is avoided in manual travel, the user recognizes the obstacle and selects operation for avoiding the obstacle by the user himself/herself to perform steering operation or braking operation. Therefore, steering operation or braking operation (deceleration) unexpected by the user is not basically performed. On the other hand, in the case of travel with the automated driving support, steering operation or braking operation for avoiding an obstacle is automatically performed. Therefore, in particular, under a situation where the user does not pay much attention to the surroundings, steering operation or braking operation that is not expected by the user is performed, and the user may be confused. As a means for solving this problem, for example, as disclosed in JP 2004-240480 A (paragraphs 0079 to 0087), it is conceivable to allow the user to grasp the presence of an obstacle in advance by superimposing and displaying an image of a three-dimensional object on the position of the obstacle included in the periphery image displayed on an in-vehicle monitor.

JP 2004-240480 A (paragraphs 0079 to 0087) also discloses changing the display color of the three-dimensional object or displaying the three-dimensional object in a blinking manner in a case where the vehicle approaches the obstacle, which is basically intended to allow the user to grasp the presence of the obstacle without overlooking it. However, the change in display color or display in a blinking manner can make it easy to grasp the presence of the obstacle, but it is not a guidance that makes the user imagine that steering operation or braking operation has been performed. Therefore, even if steering operation or braking operation for avoiding an obstacle is automatically performed by automated driving support in a state in which the three-dimensional object described in JP 2004-240480 A (paragraphs 0079 to 0087) is displayed, there is still a problem that the user is confused by the steering operation or the braking operation unexpected by the user. In addition, in the travel with the automated driving support, the vehicle basically travels while remaining within a dividing line in a section with the dividing line. Therefore, for example, in a branch point, a curve section, or the like, steering operation or braking operation is automatically performed for the dividing line in order to travel along the dividing line. Therefore, the similar problem has occurred not only with an obstacle but also with a dividing line.

A need thus exists for a driving support device that is controlled to allow the user to intuitively grasp that automatic control for avoiding approach to an obstacle or a dividing line in the periphery of a vehicle has been performed by changing a display form of an expected course image indicating an expected future course of the vehicle, in association with driving operation under the automatic control for avoiding approach to the obstacle or the dividing line in the periphery of the vehicle.

### SUMMARY

In order to achieve the above object, a driving support device according to the present disclosure performing automatic control on at least part of driving operation of a vehicle, the driving support device displaying, on a display device, a vehicle periphery image indicating a periphery of the vehicle and an expected course image indicating an expected future course of the vehicle in the vehicle periphery image, and changing, in association with driving operation under the automatic control for avoiding approach to an obstacle or a dividing line in the periphery of the vehicle, a display form on at least a side close to the obstacle or the dividing line to be avoided in the expected course image.

Note that the "vehicle periphery image" may be an image of a real view obtained by imaging the periphery of the vehicle with an imaging device such as a camera, or may be a virtual image obtained by reproducing the periphery of the vehicle with computer graphics (CG). Furthermore, in the case of an image of a real view, a captured image itself may be used, or an image obtained by processing the captured image may be used. For example, an image obtained by synthesizing images captured by a plurality of cameras or an image obtained by viewpoint transformation may be used.

The "expected future course of the vehicle" may be a course of the vehicle expected in a case where the vehicle moves while maintaining the steering angle of the vehicle at the time of display, or may be a course of the vehicle expected in a case where the vehicle moves according to automatic control.

The "expected course image" may be a plurality of lines, a single line, or an image having a polygonal shape instead of a linear shape. Furthermore, the "expected course image" may be an area simply distinguished by color, or a three-dimensional image instead of a two-dimensional image.

In addition, "changing, in association with driving operation under the automatic control for avoiding approach to an obstacle or a dividing line in the periphery of the vehicle, a display form..." means that the display form may be changed at the timing when the driving operation under the automatic control for avoiding approach to the obstacle or the dividing line is performed, or the display form may be changed immediately before the driving operation under the automatic control for avoiding approach to the obstacle or the dividing line is performed, or the display form may be changed after the driving operation under the automatic control for avoiding approach to the obstacle or the dividing line is performed.

According to the driving support device having the above configuration according to the present disclosure, the user can intuitively grasp that automatic control for avoiding approach to an obstacle or a dividing line in the periphery of a vehicle has been performed by changing a display form of an expected course image indicating an expected future course of the vehicle, in association with driving operation under the automatic control for avoiding approach to the obstacle or the dividing line in the periphery of the vehicle. As a result, even in a case where the driving operation for avoiding the obstacle or the dividing line is automatically performed, the user is not confused. B

### RIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to the present embodiment;
Fig. 2 is a block diagram illustrating a configuration of a driving support device according to the present embodiment;
Fig. 3 is a flowchart of a driving support processing program according to the present embodiment;
Fig. 4 is a diagram illustrating a method of converting a captured image into a bird's-eye view image;
Fig. 5 is a diagram illustrating a method of generating a bird's-eye view image;
Fig. 6 is a diagram illustrating an example of an expected course image generated in a case where a future course of the vehicle is straight;
Fig. 7 is a diagram illustrating an example of an expected course image generated in a case where a future course of the vehicle is a left turn;
Fig. 8 is a diagram illustrating an example of the expected course image generated in a case where the future course of the vehicle is a left turn;
Fig. 9 is a diagram illustrating display examples of a liquid crystal display in a case where the display form of the expected course image is changed;
Fig. 10 is a diagram illustrating an example of changing the display form of the expected course image stepwise;
Fig. 11 is a diagram illustrating display examples of the liquid crystal display in a case where the display form of the expected course image is changed; and
Fig. 12 is a diagram illustrating display examples of the liquid crystal display in a case where the display form of the expected course image is changed.

### DETAILED DESCRIPTION

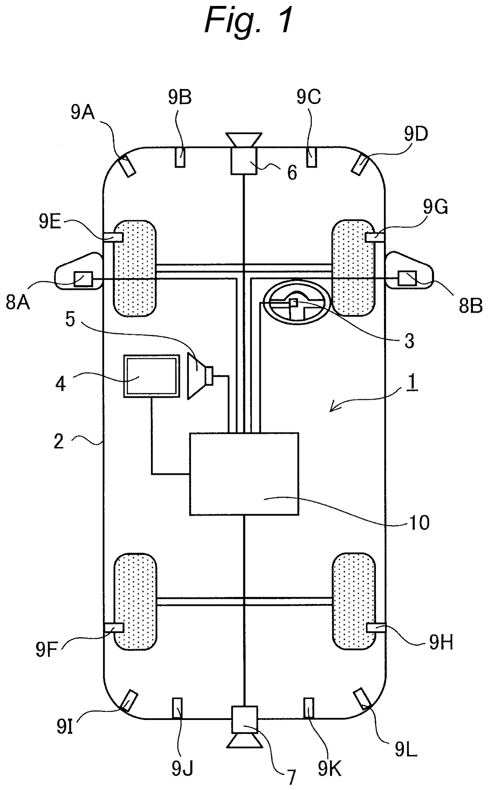

Hereinafter, an embodiment embodying a driving support device according to the present disclosure will be described in detail with reference to the drawings. First, a vehicle 2 equipped with a driving support device 1 according to the present embodiment will be described below. Fig. 1 is a schematic configuration diagram of the vehicle 2 according to the present embodiment.

Here, the vehicle 2 may be an automobile (internal combustion engine automobile) having an internal combustion engine (engine or the like) as a drive source, an automobile (electric automobile, fuel cell automobile, or the like) having an electric motor (motor or the like) as a drive source, or an automobile (hybrid automobile) using both the internal combustion engine (engine or the like) and the electric motor (motor or the like) as drive sources. In addition, the vehicle 2 may be any type of vehicle. The vehicle 2 may be a normal vehicle, or may be a commercial large truck, a bus, a construction machine, or the like. In the following description, the vehicle 2 is a four-wheeled automobile, but may be a two-wheeled or three-wheeled vehicle.

However, the vehicle 2 is assumed to be a vehicle that can perform support travel with automated driving support in which the vehicle automatically travels regardless of the user's driving operation in addition to manual driving travel in which the vehicle travels on the basis of the user's driving operation.

Further, the automated driving support may be performed only under a specific situation such as at the time of parking or at the time of exiting the parking slot, may be performed for all road sections, or may be performed only while a vehicle travels in a specific road section (for example, an expressway in which a gate (it does not matter whether it is manned or unmanned or whether it is a toll gate or free gate) is provided at a boundary). In the following description, an automated driving section in which automated driving support of a vehicle is provided includes a parking lot in addition to all road sections including general roads and expressways, and the automated driving support is performed only in a situation where the user selects execution of the automated driving support (for example, turns on an automated driving start button) and it is determined that travel with the automated driving support is possible. On the other hand, the vehicle 2 may be a vehicle capable of only support travel with automated driving support. Alternatively, instead of being triggered by selection by the user, automated driving support such as steering operation or braking operation for avoiding an obstacle (for example, a person, a bicycle, another vehicle, a wall, or the like) may be performed as support (safety device) for the driver against the obstacle in a case where it is detected that the obstacle is located in a support target area set in a space in front of the vehicle 2.

In vehicle control in the automated driving support of the present embodiment, for example, the current position of a vehicle, the lane on which the vehicle travels, and the position of the surrounding obstacle are detected as needed, and vehicle control such as controlling the steering, the drive source, or the brakes is automatically performed such that the vehicle travels along the generated travel track at the speed according to the speed plan that is also generated. However, only steering operation may be automatically performed, and the drive source and the brakes may be controlled on the basis of manual operation. In addition, automated driving support of a vehicle according to the present embodiment also includes lane deviation prevention support, and in a case where it is detected that a dividing line (for example, a roadway center line, a lane boundary line, a roadway outside line, a parking slot line, or the like) is positioned around the vehicle 2, automated driving support such as steering operation or braking operation is also performed in order to avoid deviation from the dividing line. Furthermore, when the automated driving support is performed, a scene around the vehicle 2 (which may be a real scene or a virtual scene of CG) is displayed on an in-vehicle display as described later, and an expected course image indicating an expected future course of the vehicle 2 is also displayed on the displayed scene around the vehicle 2.

As illustrated in Fig. 1, the vehicle 2 includes an operation unit 3 that receives an operation from an occupant, a liquid crystal display 4 that displays a bird's-eye view image or an overhead view image of the periphery of the vehicle 2 and other information related to driving support to the occupant, a loudspeaker 5 that outputs audio guidance related to driving support, a front camera 6, a rear camera 7, and side cameras 8A and 8B for imaging the periphery of the vehicle 2, ultrasonic sensors 9A to 9L that detect an obstacle around the vehicle 2, and a driving support electronic control unit (ECU) 10 that performs various types of arithmetic processing on the basis of input information. Note that the driving support device 1 includes the driving support ECU 10.

Hereinafter, each component included in the vehicle 2 will be described. First, the operation unit 3 is disposed, for example, on a front surface of a steering wheel, and includes an operation button to be operated when automated driving support is started, and the like. By operating the operation unit 3, the user can switch between manual driving travel in which the vehicle 2 travels on the basis of the user's driving operation and support travel with automated driving support in which the vehicle 2 automatically travels regardless of the user's driving operation. Note that the operation unit 3 may include a touch panel provided on the front surface of the liquid crystal display 4. Further, the operation unit 3 may include a microphone and a voice recognition device.

The liquid crystal display 4 is a type of display device, is provided on an instrument panel of the vehicle 2, and displays a bird's-eye view image or an overhead view image of the periphery of the vehicle 2 generated by performing viewpoint conversion and synthesis processing on captured images captured by the front camera 6, the rear camera 7, and the side cameras 8A and 8B, respectively, during execution of automated driving support. Furthermore, an expected course image indicating an expected future course of the vehicle 2 is also displayed in the bird's-eye view image or the overhead view image. Note that the liquid crystal display 4 may also be used for a navigation device.

In addition, the loudspeaker 5 is provided on the instrument panel of the vehicle 2, and outputs a guidance voice, a warning sound, and the like related to driving support. Note that the loudspeaker 5 may also be used for the navigation device.

The front camera 6 is an imaging device including a camera using a solid-state imaging element such as a CCD, for example, and is installed, for example, above a front bumper of the vehicle 2 or on a back side of a room mirror with the optical axis direction facing forward in a traveling direction of the vehicle 2.

Similarly, the rear camera 7 is an imaging device that includes a camera using a solid-state imaging element such as a CCD. The rear camera 7 is attached to, for example, the vicinity of the upper center of a number plate attached to the rear of the vehicle 2, and is installed with the optical axis direction facing the rear of the vehicle 2.

Furthermore, similarly, the side cameras 8A and 8B are imaging devices each including a camera using a solid-state imaging element such as a CCD, are attached to, for example, left and right side mirrors of the vehicle 2, and are installed such that optical axis directions face sides of the vehicle 2.

The driving support ECU 10 generates a bird's-eye view image or an overhead view image of the periphery of the vehicle 2 by performing viewpoint conversion and synthesis processing on the captured images captured by the front camera 6, the rear camera 7, and the side cameras 8A and 8B, respectively. During execution of automated driving support, an image recognition process is performed on the captured image to detect a dividing line or an obstacle (another vehicle, a pedestrian, a bicycle, a wall, a guard rail, or another structure) around the vehicle 2, and automated driving support is executed on the basis of the detection result.

The ultrasonic sensors 9A to 9L are disposed at predetermined intervals at the front, rear, and side portions of the vehicle 2, respectively, transmit ultrasonic waves as probing waves to the surroundings of the vehicle 2, and receive reflected waves of the transmitted probing waves reflected by an object around the vehicle 2, thereby detecting an object reflecting the probing waves. Specifically, each of the ultrasonic sensors 9A to 9L is a type of distance measuring sensor capable of detecting the distance (distance measurement value) to the object that has reflected the probing wave by measuring the time from transmission to reception. In addition, the ultrasonic sensors 9A to 9L are configured to be capable of generating an output signal (including the distance to the detected object) corresponding to the reception result of the received wave and outputting the output signal to a control unit. Note that examples of the object to be detected by the ultrasonic sensors 9A to 9L include obstacles that need to be avoided when the vehicle 2 travels, such as a person, a bicycle, another vehicle, and a wall. Note that as the distance measuring sensor, a millimeter wave sensor or a laser sensor may be used instead of the ultrasonic sensor. In addition, in the present embodiment, as described above, it is also possible to detect an obstacle by performing image recognition on captured images captured by the front camera 6, the rear camera 7, and the side cameras 8A and 8B, respectively. Therefore, if the obstacle is detected by the above-described cameras, the ultrasonic sensors 9A to 9L may be omitted.

On the other hand, the driving support ECU 10 is an electronic control unit that performs various processes related to automated driving support. For example, the current position of the vehicle 2, the lane on which the vehicle 2 travels, and the position of the surrounding obstacle are detected as needed, and vehicle control such as controlling the steering, the drive source, or the brakes is automatically performed such that the vehicle 2 travels along the generated travel track at the speed according to the speed plan that is also generated. In addition, the liquid crystal display 4 displays a scene (which may be a real scene or a virtual scene of CG) around the vehicle 2, and further displays an expected course image indicating an expected future course of the vehicle 2 in the scene. In addition, in a case where driving operation under automatic control for avoiding approach to an obstacle or a dividing line around the vehicle 2 is performed, a display form on at least a side close to the obstacle or the dividing line to be avoided in the expected course image is changed. The driving support ECU 10 is connected to the operation unit 3, the liquid crystal display 4, the loudspeaker 5, the front camera 6, the rear camera 7, the side cameras 8A and 8B, and the ultrasonic sensors 9A to 9L described above through an in-vehicle network such as a CAN. Further, the driving support ECU 10 is also connected to various sensors 36 such as a vehicle speed sensor, an acceleration sensor, and a steering sensor mounted on the vehicle 2, the navigation device which is an in-vehicle device, and the like. Note that the detailed configuration of the driving support ECU 10 will be described later.

Although the vehicle 2 includes basic components as the vehicle 2 in addition to the components illustrated in Fig. 1, only a configuration related to control of automated driving support and control related to the configuration will be described.

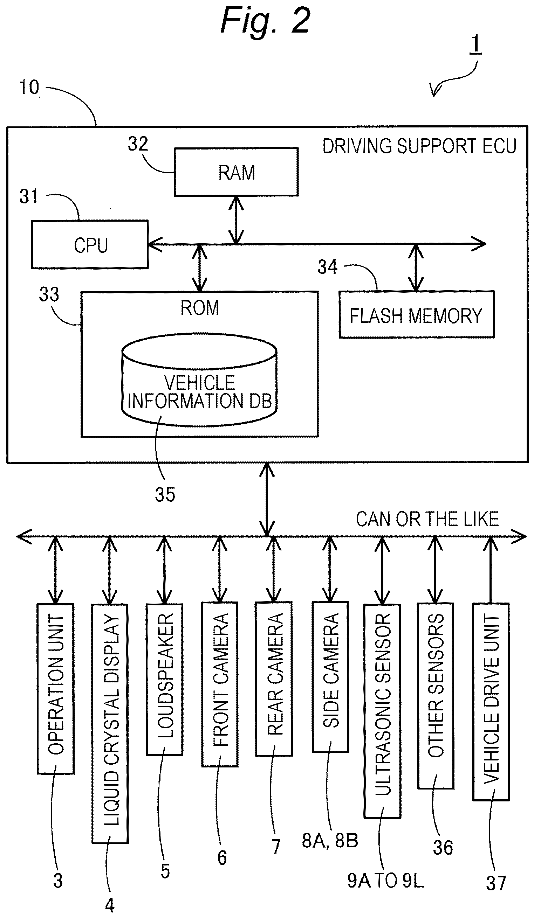

Next, details of the driving support ECU 10 in the driving support device 1 included in the above-described vehicle 2 will be described. Fig. 2 is a block diagram illustrating a configuration of the driving support device 1 according to the present embodiment.

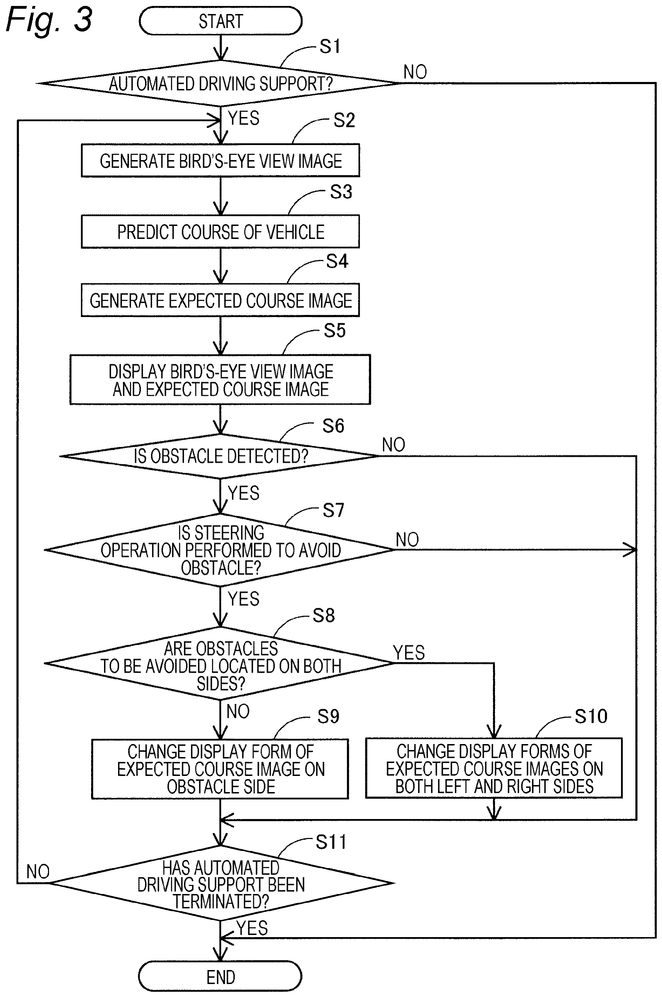

As illustrated in Fig. 2, the driving support electronic control unit (ECU) 10 is an electronic control unit that performs overall control of the driving support device 1, and includes a CPU 31 as an arithmetic device and a control device, and internal storage devices such as a RAM 32 that is used as a working memory when the CPU 31 performs various types of arithmetic processing and that stores data of a generated travel track, and the like, a ROM 33 that stores a driving support processing program (see Fig. 3) to be described later, and the like, in addition to a program for control, and a flash memory 34 that stores the program read from the ROM 33. Note that the driving support ECU 10 has various functions as processing algorithms. Examples of the various functions include a function of displaying, on the liquid crystal display 4, a vehicle periphery image indicating the periphery of the vehicle 2 and an expected course image indicating a future expected course of the vehicle 2 in the vehicle periphery image, a function of changing, in association with driving operation under automatic control for avoiding approach to an obstacle or a dividing line in the periphery of the vehicle 2, a display form on at least a side close to the obstacle or the dividing line to be avoided in the expected course image.

The driving support ECU 10 is also connected to the various sensors 36 for detecting the behavior of the vehicle 2, such as the vehicle speed sensor, the acceleration sensor, and the steering sensor, and drive units 37 of the vehicle 2, such as the steering, the brakes, and an accelerator. The driving support ECU 10 controls the drive units 37 while detecting the current behavior of the vehicle 2 on the basis of the detection results of the sensors 36, thereby performing automated driving support of the vehicle 2. As the specific content of the automated driving support, the current position of the vehicle 2, the lane on which the vehicle 2 travels, and the position of the surrounding obstacle are detected as needed, and vehicle control such as controlling the steering, the drive source, or the brakes is performed such that the vehicle 2 travels along the generated travel track at the speed according to the speed plan that is also generated. However, only steering operation may be automatically performed, and the drive source and the brakes may be controlled on the basis of manual operation.

The ROM 33 includes a vehicle information DB 35, and the vehicle information DB 35 stores various types of information regarding the vehicle 2. For example, the installation positions (height from ground surface, position in left-right direction) of the cameras and the ultrasonic sensors 9A to 9L installed in the vehicle 2, the detection axis X, the total length, the vehicle width, the wheelbase, the minimum turning radius, and the like are stored. These pieces of information are input in advance by an occupant or a person who works for the vehicle manufacturer.

Next, the driving support processing program executed by the driving support ECU 10 in the driving support device 1 having the above-described configuration will be described with reference to Fig. 3. Fig. 3 is a flowchart of the driving support processing program according to the present embodiment. Here, the driving support processing program is a program that is executed after an accessory power supply (ACC) of the vehicle 2 is turned on, and supports the user by using a bird's-eye view image or an overhead view image of the periphery of the vehicle 2 while automated driving support of the vehicle 2 is being performed. Note that the program to be described below illustrated in the flowchart in Fig. 3 is stored in the RAM 32 or the ROM 33 included in the driving support device 1, and is executed by the CPU 31.

First, in step (hereinafter, abbreviated as S)1, the CPU 31 determines whether or not support travel with automated driving support is being performed. Note that, in the present embodiment, in a situation where the user operates the operation unit 3 to select execution of automated driving support and it is determined that travel with automated driving support can be performed, support travel with automated driving support is performed. As the content of the automated driving support, the current position of the vehicle 2, the lane on which the vehicle 2 travels, and the positions of the surrounding dividing line and obstacle are detected as needed, and vehicle control such as controlling the steering, the drive source, or the brakes is automatically performed such that the vehicle 2 travels along the generated travel track at the speed according to the speed plan that is also generated. However, only steering operation may be automatically performed, and the drive source and the brakes may be controlled on the basis of manual operation.

In a case where it is determined that support travel with automated driving support is being performed (S1: YES), the process shifts to S2. On the other hand, in a case where it is determined that support travel with automated driving support is not performed (S1: NO), the driving support processing program is terminated.

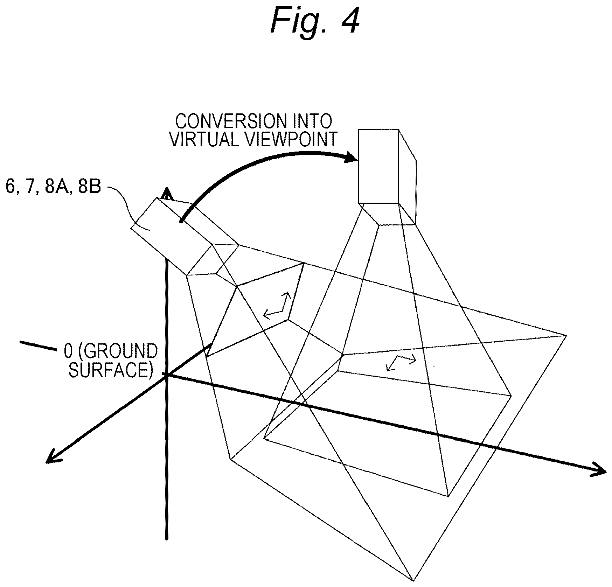

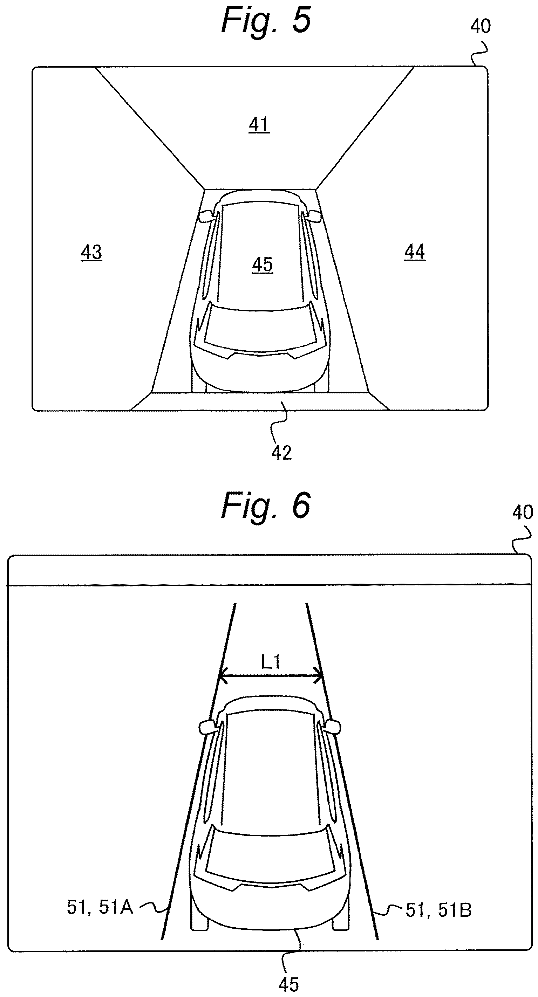

In S2, the CPU 31 generates a bird's-eye view image of the periphery of the vehicle as viewed obliquely downward from the sky on the basis of the real-time captured images captured by the front camera 6, the rear camera 7, and the side cameras 8A and 8B. A method for generating the bird's-eye view image 40 looking down on the front of the vehicle 2 will be described below. As illustrated in Fig. 4, a real-time captured image captured by each camera is projected on a virtual projection plane that is a horizontal plane corresponding to the height of the ground surface, and the captured image projected on the virtual projection plane is converted into an image viewed from a virtual viewpoint obliquely looking down forward in the traveling direction (on the rear of the vehicle 2 if the vehicle 2 is moving backward) from above the vehicle 2, thereby generating a bird's-eye view image of each camera. Note that conversion (viewpoint conversion) into the image viewed from the virtual viewpoint is performed by first converting each coordinate of a captured image coordinate system set along the plane perpendicular to the optical axis of the camera into a coordinate of a ground coordinate system set along the ground surface, and further converting the coordinate into a coordinate of a bird's-eye view image coordinate system. Note that the conversion formulae used for the respective coordinate conversions are already known, and thus description thereof is omitted. Then, as illustrated in Fig. 5, a bird's-eye view image 41 obtained by converting the viewpoint of the captured image of the front camera 6, a bird's-eye view image 42 obtained by converting the viewpoint of the captured image of the rear camera 7, a bird's-eye view image 43 obtained by converting the viewpoint of the captured image of the side camera 8A, and a bird's-eye view image 44 obtained by converting the viewpoint of the captured image of the side camera 8B are synthesized (connected), and an own vehicle image 45 schematically illustrating the own vehicle is further inserted between the bird's-eye view images 41 to 44 to generate the bird's-eye view image 40. Note that if the bird's-eye view image 40 is a bird's-eye view image obliquely looking down forward in the traveling direction, the bird's-eye view image 42 obtained by viewpoint transformation of the captured image of the rear camera 7 may be excluded from the synthesis target (that is, an image of only the front side in the traveling direction with respect to the vehicle position may be used). On the other hand, if the bird's-eye view image 40 is a bird's-eye view image obliquely looking down on the rear of the vehicle 2 at the time of backward movement, the bird's-eye view image 41 obtained by viewpoint transformation of the captured image of the front camera 6 may be excluded from the synthesis target (that is, the image of only the rear side with respect to the vehicle position may be used).

Note that, instead of the bird's-eye view image, an overhead view image looking down on the periphery of the vehicle 2 vertically downward from the sky may be generated. Alternatively, both the bird's-eye view image and the overhead view image may be generated. Processing of generating the overhead view image is basically similar to that of the bird's-eye view image except the angle of the line-of-sight direction at the time of viewpoint transformation. Thus, the description thereof will be omitted.

Thereafter, in S3, the CPU 31 acquires an expected course of the vehicle 2 in the future. Note that the expected course of the vehicle 2 in the future may be (A) a course of the vehicle 2 expected in a case where the vehicle 2 moves while maintaining the current steering angle of the vehicle 2, or (B) a course of the vehicle 2 expected in a case where the vehicle 2 moves according to the automatic control by the automated driving support being currently executed.

The course (A) can be predicted by acquiring the current steering angle from the steering sensor included in the vehicle 2 through the CAN. On the other hand, the course (B) can be predicted by acquiring a travel track generated in advance by the currently executed automated driving support, that is, a future travel track of the vehicle 2. Note that the course (A) is appropriately changed if the steering angle changes, but the course (B) is basically fixed even if the steering angle changes unless there is a circumstance such as detecting an obstacle that needs to be newly avoided.

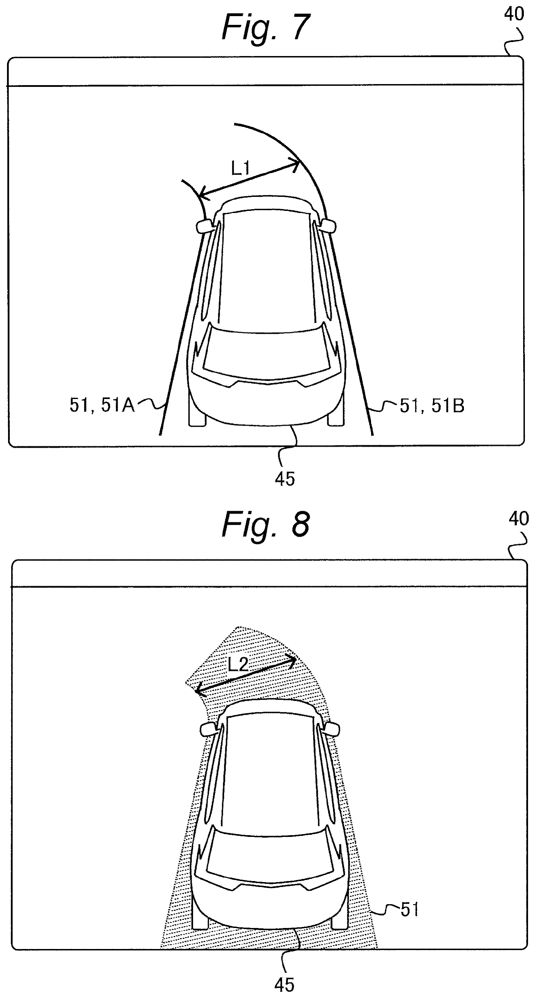

Next, in S4, the CPU 31 generates an expected course image 51. The expected course image 51 is an image indicating an expected future course of the vehicle 2 in the vehicle periphery image. Note that the expected future course of the vehicle 2 is one of the courses (A) and (B) predicted in S3. Here, Fig. 6 is a diagram illustrating an example of the expected course image 51 generated in S4. As illustrated in Fig. 6, the expected course image 51 has two line segments corresponding to left and right ends of the vehicle 2 respectively, the two line segments being arranged along the expected future course of the vehicle 2, and more specifically, includes an expected course image 51A corresponding to the left end of the vehicle 2 and an expected course image 51B corresponding to the right end of the vehicle 2. The expected course image 51A and the expected course image 51B are arranged so that a length L1 between the expected course image 51A and the expected course image 51B maintains a distance equal to or longer than the vehicle width (vehicle width + α). Note that Fig. 6 particularly illustrates the expected course image 51 generated in a case where the expected future course of the vehicle 2 is straight. In a case where the expected future course of the vehicle 2 turns right or turns left, the expected course image 51 generated as illustrated in Fig. 7 also has line segments curved rightward or leftward.

Note that in the above example, the expected course image 51 represents the course of the vehicle 2 by the two line segments, but the present disclosure is not limited thereto, and for example, as illustrated in Fig. 8, one wide line segment along the course of the vehicle 2 may be used. In this case, a width L2 of the line segment of the expected course image 51 is equal to or longer than the vehicle width (vehicle width + α). In addition, the expected course image 51 as illustrated in Fig. 8 is desirably a semi-transmissive image. As a result, in a case where the expected course image 51 is superimposed and displayed on the vehicle periphery image as described later, it is possible to prevent the visibility of the vehicle periphery image from deteriorating.

Thereafter, in S5, the CPU 31 displays, on the liquid crystal display 4, the real-time bird's-eye view image 40 indicating the current environment around the vehicle 2 generated in S2 as the vehicle periphery image indicating the periphery of the vehicle 2. Further, the expected course image 51 generated in S4 is superimposed on the bird's-eye view image 40 and is also displayed on the liquid crystal display 4. Note that in the present embodiment, only the bird's-eye view image 40 is displayed on the liquid crystal display 4. However, the overhead view image may also be displayed, or the bird's-eye view image and the overhead view image may be switchably displayed by user's operation.

Note that specific display examples of the liquid crystal display 4 are Figs. 6 to 8 described above. By viewing the bird's-eye view image 40, the future course of the own vehicle including the area that is difficult for the user to directly view is clarified and the user can grasp the environment around the vehicle 2. Thereafter, the bird's-eye view image 40 and the expected course image 51 are displayed continuously until the support travel with automated driving support is terminated (S11: YES). When the course of the vehicle 2 is updated, the shape of the expected course image 51 also changes accordingly.

In addition, in the bird's-eye view image 40 displayed in S5, an own vehicle image 45 indicating the appearance of the vehicle 2 is displayed at the current position of the vehicle 2, but it is desirable that the transmittance of the own vehicle image 45 is not opaque but is semi-transmissive (for example, transmittance of 30%). As a result, it is possible to obtain the bird's-eye view image 40 in which the surrounding environment is more easily recognized. On the other hand, in a case where driving operation for avoiding approach to an obstacle is performed as described later (S7: YES), the transmittance of the own vehicle image 45 may be lowered in order to clarify the positional relationship between the vehicle 2 and the obstacle.

Next, in S6, the CPU 31 determines whether or not an obstacle is detected around the vehicle 2. In a case where an obstacle is detected, the position of the obstacle and the range occupied by the obstacle in the bird's-eye view image 40 generated in S2 are also detected. Here, the obstacle is an object that needs to be avoided when a vehicle travels, and corresponds to, for example, another vehicle, a pedestrian, a bicycle, a wall, a guard rail, and other structures. On the other hand, a step or the like that allows passage is excluded. An obstacle may be detected by performing image recognition on captured images captured by the front camera 6, the rear camera 7, and the side cameras 8A and 8B, respectively, may be detected by the ultrasonic sensors 9A to 9L, or may be detected by using both the above methods in combination. Note that as processing of detecting an obstacle from the captured image, for example, binarization processing of performing luminance correction on the road surface and an obstacle on the road surface on the basis of a luminance difference and then separating the obstacle from the image, geometric processing of correcting distortion, smoothing processing of removing noise of the image, and the like are performed, and a boundary line between the road surface and the obstacle can be detected. Note that the type of the obstacle may also be detected using known template matching processing, feature point detection processing, or the like. Furthermore, the image recognition processing on the captured image is not limited to the above example, and may be performed using, for example, machine learning.

In a case where an obstacle is detected around the vehicle 2 (S6: YES), the process proceeds to S7. On the other hand, in a case where no obstacle is detected around the vehicle 2 (S6: NO), the process proceeds to S11.

In S7, the CPU 31 acquires the control content executed in automated driving support processing executed in parallel with the present program (under what kind of situation what kind of automated driving support has been performed), and particularly determines whether or not steering operation which is driving operation under automatic control for avoiding approach to an obstacle has been performed by automated driving support. Note that regarding the steering operation, a condition that steering operation at a threshold angle or more or steering operation at a threshold speed or more has been performed may be set.

In a case where it is determined that steering operation under automatic control for avoiding approach to the obstacle has been performed (S7: YES), the process proceeds to S8. On the other hand, in a case where it is determined that steering operation under automatic control for avoiding approach to the obstacle has not been performed (S7: NO), the process proceeds to S11.

Subsequently, in S8, the CPU 31 determines whether or not obstacles to be avoided are located on both sides (right side and left side with respect to the traveling direction of the own vehicle) with respect to the vehicle 2 by the steering operation under automatic control. For example, in a case where an obstacle exists on each of the right side and the left side with respect to the traveling direction of the vehicle 2, and steering operation for passing between the obstacles is performed, the determination is YES. In S8, not only the obstacle that is the object to be avoided in the automatic control currently performed but also an obstacle that will be the object to be avoided in the future may be included. For example, in a case where the vehicle 2 avoids an obstacle on the left side and then avoids an obstacle on the right side of the vehicle 2, the determination may be YES.

Since it is highly likely that there are obstacles to be avoided by steering operation on both sides of the vehicle 2 on a road having a narrow road width such as a narrow street, it may be determined in S8 whether or not the road on which the vehicle 2 travels is a road having a narrow road width (for example, a road width of less than 4 m) such as a narrow street. In addition, an oncoming vehicle is an obstacle to be avoided by steering operation on a road having no center line even if the road is wider than a narrow street and bidirectional traveling is enabled on the road. Therefore, it may be determined in S8 whether or not the road on which the vehicle 2 travels is a road having no center line. In this case, the determination in S8 can be made from map information and the current position of the vehicle 2.

In a case where it is determined that obstacles to be avoided by the steering operation under automatic control are located on both sides of the vehicle 2 (S8: YES), the process proceeds to S10. On the other hand, in a case where it is determined that an obstacle to be avoided by the steering operation under automatic control is located only on one of the right side and the left side of the vehicle 2 (S8: NO), the process proceeds to S9.

In S9, the CPU 31 changes only the display form on the side close to the obstacle to be avoided by automatic control in the expected course image 51 displayed on the liquid crystal display 4. In the present embodiment, in particular, the appearance shape of the expected course image 51 is changed so as to increase the height of at least part of the area on the side close to the obstacle in the expected course image 51.

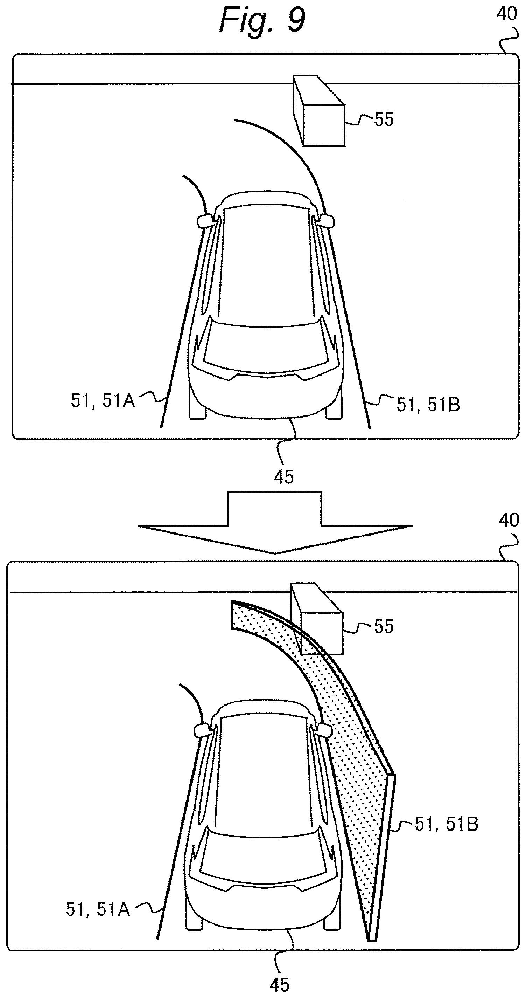

Hereinafter, details of the process of S9 will be described with specific examples. For example, Fig. 9 is a diagram illustrating a change example of the display form in a case where the expected course image 51 is displayed by two line segments, that is, the expected course image 51A corresponding to the left end of the vehicle 2 and the expected course image 51B corresponding to the right end of the vehicle 2. Here, in the example illustrated in Fig. 9, since an obstacle 55 on the right front with respect to the course of the own vehicle is an obstacle to be avoided, the display form is changed for the expected course image 51B, which is a line segment on the side close to the obstacle 55 out of the expected course image 51A and the expected course image 51B. More specifically, the CPU 31 changes the appearance shape of the expected course image 51B so as to increase the height of the expected course image 51B. As a result, as illustrated in Fig. 9, the expected course image 51B changes from a two-dimensional line drawn on the road surface to a plane having a height. As a result, a wall newly appears between the own vehicle image 45 and the obstacle 55, and the own vehicle image 45 can be displayed as if traveling along the wall in accordance with the traveling of the vehicle 2. Note that the height of the wall may be fixed or may be changed according to the type and position of the obstacle to be avoided. For example, in a case where the type of the obstacle 55 is an obstacle (for example, a pedestrian) to be particularly noted for the own vehicle, or in a case where the obstacle 55 approaches the own vehicle within a predetermined distance, the height of the wall can be changed to be higher.

Alternatively, the height of the wall may be set according to the height of the obstacle 55 to be avoided. Specifically, the height of the wall can be set as high as possible within a range in which the obstacle 55 can be visually recognized without being hidden by the wall in the bird's-eye view image 40.

In addition, the timing to change the display form of the expected course image 51 may be a timing at which driving operation for avoiding approach to an obstacle is performed (a driving operation start time point), may be a timing immediately before the driving operation for avoiding approach to the obstacle is performed, or may be a timing after the driving operation for avoiding approach to the obstacle is performed (after a predetermined time elapses from the start of the driving operation).

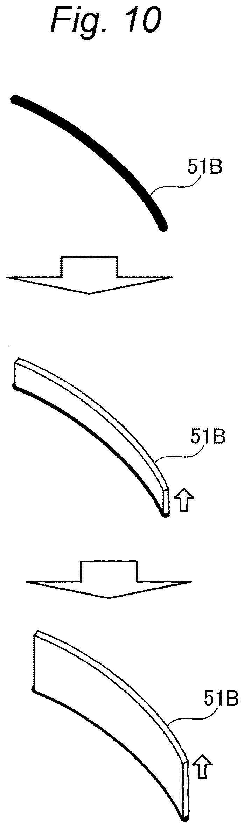

In addition, the display form of the expected course image 51 may be changed at a time or may be changed stepwise. In particular, in the case of changing the display form stepwise, the wall is depicted so as to gradually rise from the ground as illustrated in Fig. 10. As a result, it is possible to give the user a sense of security as if being protected by the hidden wall even before the wall appears. Furthermore, the change in the display form may be not only a change in the appearance shape but also a change in the display color, performing display in a blinking manner, or a combination thereof, or these may be simultaneously performed. In particular, in a case where a condition that the obstacle 55 approaches the own vehicle within a predetermined distance is satisfied, a change in display color or display in a blinking manner may be performed in addition to a change in the appearance shape. Alternatively, in a case where a condition that the type of the obstacle 55 is an obstacle (for example, a pedestrian) to be particularly noted for the own vehicle is satisfied, a change in display color or display in a blinking manner may be performed in addition to a change in the appearance shape.

On the other hand, in S9, only a change in display color or display in a blinking manner may be performed without changing the appearance shape of the expected course image 51. For example, in a case where there is the obstacle 55 to be avoided on the right front with respect to the course of the own vehicle as illustrated in Fig. 9, the display color of the expected course image 51B, which is a line segment on the side close to the obstacle 55, can be changed to red or the expected course image 51B can be displayed in a blinking manner.

Further, in S9, the user may be notified of execution of the driving operation under automatic control for avoiding approach to the obstacle from the loudspeaker 5 by voice or sound effect in addition to the change in the display form of the expected course image 51.

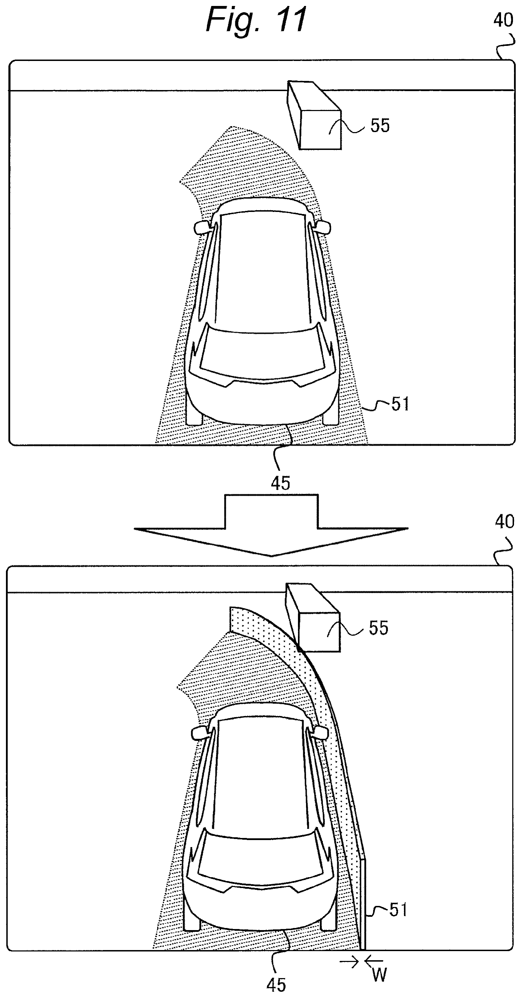

Note that although Fig. 9 illustrates the case where the expected course image 51 is displayed by the two line segments, that is, the expected course image 51A corresponding to the left end of the vehicle 2 and the expected course image 51B corresponding to the right end of the vehicle 2, the display form is changed as illustrated in Fig. 11 in a case where the expected course image 51 is displayed by one wide line segment along the course of the vehicle 2.

Here, in the example illustrated in Fig. 11, since the obstacle 55 on the right front with respect to the course of the own vehicle is an obstacle to be avoided, the display form is changed for at least a region having a predetermined width W from an end (right end in Fig. 11) on a side close to the obstacle 55 to be avoided in the expected course image 51. More specifically, the CPU 31 changes the appearance shape of the expected course image 51 so as to increase the height of the expected course image 51 in the corresponding region. As a result, as illustrated in Fig. 11, part of the expected course image 51 changes from a two-dimensional line drawn on the road surface to a plane having a height. As a result, a wall newly appears between the own vehicle image 45 and the obstacle 55, and the own vehicle image 45 can be displayed as if traveling along the wall in accordance with the traveling of the vehicle 2.

In addition, the image of the wall appearing by changing the display form of the expected course image 51 illustrated in Fig. 9 or 11 may be displayed in a semi-transmissive manner (for example, a transmittance of 30%) instead of being opaque. In addition, the transmittance of the image of the wall may be changed depending on the height from the ground, and the higher the position is, the higher the transmittance may be. As a result, it is possible to obtain the bird's-eye view image 40 in which the surrounding environment is more easily recognized. On the other hand, the distance between the vehicle 2 and the obstacle may be measured, and the image of the wall may be depicted so as to change the transmittance of the image of the wall according to the measured distance. For example, the transmittance may be gradually changed such that the closer the distance between the vehicle 2 and the obstacle, the lower the transmittance, and the farther the distance between the vehicle 2 and the obstacle, the higher the transmittance. Furthermore, the transmittance of the image of the wall may change depending on the elapsed time from the start of the driving operation for avoiding approach to the obstacle or the amount of the driving operation. For example, the transmittance may be gradually decreased with the lapse of time from the start of the driving operation for avoiding approach to the obstacle. Alternatively, the transmittance may be changed according to the amount of change in the steering angle for avoiding approach to the obstacle, more specifically, the transmittance may be changed so as to decrease as the steering angle increases.

In addition, the expected course image 51 whose display form has been changed in S9 is returned to the original display form stepwise as the driving operation for avoiding approach to the obstacle is terminated. For example, after control to return the steering to the direction of the neutral position after avoiding the obstacle is started, the height of the appeared wall can be gradually lowered to return to the original line segment near the neutral position. Alternatively, the display form may be continuously changed until the steering reaches the neutral position, and the height of the wall may be switched in one step at the timing when the steering reaches the neutral position. Alternatively, the display form of the expected course image 51 may be returned to the original display form after a predetermined time has elapsed from the change of the display form or after movement by a predetermined distance. Thereafter, the process proceeds to S11.

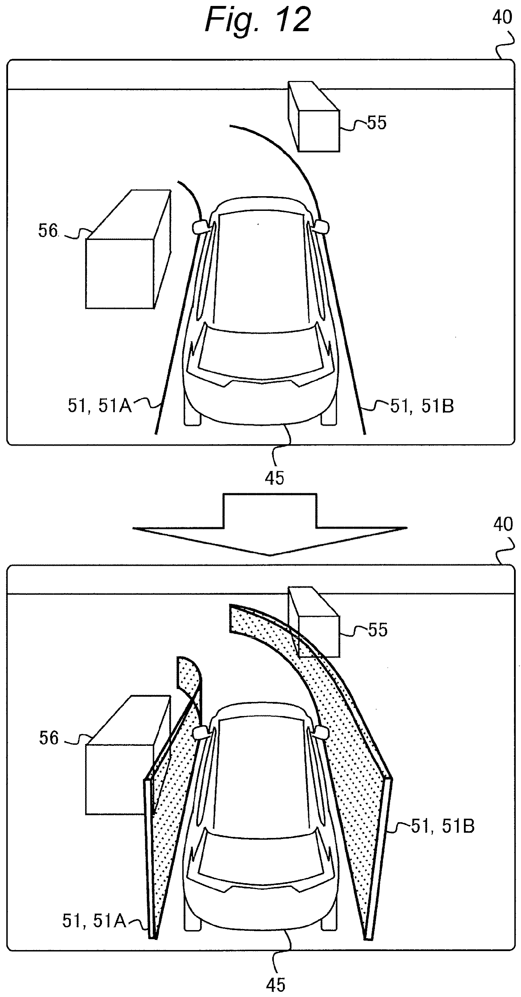

On the other hand, in S10, the CPU 31 changes the display forms on both the left and right sides of the expected course image 51 displayed on the liquid crystal display 4. For example, Fig. 12 is a diagram illustrating a change example of the display form in a case where the expected course image 51 is displayed by two line segments, that is, the expected course image 51A corresponding to the left end of the vehicle 2 and the expected course image 51B corresponding to the right end of the vehicle 2.

Here, in the example illustrated in Fig. 12, the obstacle 55 on the right front and an obstacle 56 on the left front with respect to the course of the own vehicle are obstacles to be avoided by the steering operation under automatic control. In the example illustrated in Fig. 12, the display form is changed for both the expected course image 51A and the expected course image 51B. More specifically, the CPU 31 changes the appearance shape of the expected course image 51A so as to increase the height of the expected course image 51A, and changes the appearance shape of the expected course image 51B so as to increase the height of the expected course image 51B. As a result, as illustrated in Fig. 12, the expected course image 51A and the expected course image 51B change from two-dimensional lines drawn on the road surface to planes each having a height. As a result, a wall newly appears between the own vehicle image 45 and the obstacle 55 and between the own vehicle image 45 and the obstacle 56, and the own vehicle image 45 can be displayed as if traveling along the walls in accordance with the traveling of the vehicle 2. Note that the height of the wall may be fixed or may be changed according to the type and position of the obstacle to be avoided. For example, in a case where the type of the obstacle 55 or 56 is an obstacle (for example, a pedestrian) to be particularly noted for the own vehicle, or in a case where the obstacle 55 or 56 approaches the own vehicle within a predetermined distance, the height of the wall can be changed to be higher.

Thereafter, in S11, the CPU 31 determines whether or not to terminate the support travel with automated driving support. Here, the support travel with automated driving support may be terminated, for example, on condition that the user performs predetermined termination operation on the operation unit 3, or on condition that the shift position is shifted to "P" or the engine is turned off. In addition, a condition that the automated driving support cannot be continued may be set as a condition for termination.

In a case where it is determined that the support travel with automated driving support has been terminated (S11: YES), the driving support processing program is terminated. On the other hand, in a case where it is determined that the support travel with automated driving support has not been terminated (S11: NO), the process returns to S2, and the bird's-eye view image 40 and the expected course image 51 are continuously displayed on the liquid crystal display 4.

Note that in the automated driving support, in addition to the steering control for avoiding the obstacle, steering operation for avoiding deviation from the dividing line is also performed by lane deviation prevention support. In the driving support processing program according to the present embodiment described above, the display form of the expected course image 51 on the side close to the obstacle to be avoided is changed (S9, S10) in a case where the driving operation under automatic control for avoiding approach to the obstacle is performed. However, even in a case where the driving operation for avoiding approach to not an obstacle but a dividing line (for example, a roadway center line, a lane boundary line, a roadway outside line, a parking slot line, or the like) is performed, the display form of the expected course image 51 on the side close to the dividing line to be avoided may be similarly changed. Note that as the timing to change the display form of the expected course image 51, a change may be made at the timing when the driving operation for avoiding approach to the dividing line is performed, may be made immediately before the driving operation for avoiding approach to the dividing line is performed, or may be made after the driving operation for avoiding approach to the dividing line is performed. In detail, the target is only replaced from the obstacle to the dividing line, and the contents of the processing are similar.

As described above in detail, according to the driving support device 1 and the computer program executed by the driving support device 1 according to the present embodiment, the vehicle periphery image indicating the periphery of the vehicle 2 and the expected course image 51 indicating the future expected course of the vehicle 2 in the vehicle periphery image are displayed on the liquid crystal display 4 (S5), and in association with the driving operation under automatic control for avoiding approach to the obstacle or the dividing line in the periphery of the vehicle 2, the display form on at least the side close to the obstacle or the dividing line to be avoided in the expected course image 51 is changed (S9, S10). Therefore, it is possible to allow the user to intuitively grasp that the automatic control for avoiding approach to the obstacle or the dividing line in the periphery of the vehicle 2 has been performed. As a result, even in a case where the driving operation for avoiding the obstacle or the dividing line is automatically performed, the user is not confused.

In addition, in a case where the display form of the expected course image 51 is changed, the appearance shape of the expected course image 51 is changed so as to increase the height of at least part of the area on the side close to the obstacle or the dividing line in the expected course image 51. Therefore, a wall newly appears between the vehicle and the obstacle or the dividing line, and it is possible to perform display as if the vehicle 2 is traveling along the wall.

In addition, in a case where the display form of the expected course image 51 is changed, the display color on the side close to the obstacle or the dividing line in the expected course image 51 is changed, so that it is possible to display the fact that the automatic control for avoiding approach to the obstacle or the dividing line in the periphery of the vehicle 2 has been performed in a visually easy-to-understand manner for the user. As a result, even in a case where the driving operation for avoiding the obstacle or the dividing line is automatically performed, the user is not confused.

In addition, in a case where the display form of the expected course image 51 is changed, the side close to the obstacle or the dividing line in the expected course image 51 is displayed in a blinking manner, so that it is possible to display the fact that the automatic control for avoiding approach to the obstacle or the dividing line in the periphery of the vehicle 2 has been performed in a visually easy-to-understand manner for the user. As a result, even in a case where the driving operation for avoiding the obstacle or the dividing line is automatically performed, the user is not confused.

Note that the present disclosure is not limited to the above embodiment, and various improvement and modifications can be made without departing from the gist of the present disclosure.

For example, in the present embodiment, the expected course image 51 is superimposed and displayed on the scene around the vehicle 2 by displaying the scene image around the vehicle 2 captured by the camera on the liquid crystal display 4 in the vehicle 2 and further displaying the expected course image 51 on the liquid crystal display 4. However, a head-up display system (HUD) may be used as means for displaying the image superimposed on the scene around the vehicle 2. In the head-up display system, for example, the expected course image 51 displayed on the display in the vehicle is reflected on the windshield and visually recognized by the user, so that the expected course image 51 (more precisely, a virtual image of the expected course image 51) can be superimposed on the actual scene visually recognized by the user through the windshield and can be visually recognized.

Further, in the present embodiment, as the scene image around the vehicle 2, the bird's-eye view image 40 generated from the captured images captured by the front camera 6, the rear camera 7, and the side cameras 8A and 8B, respectively, is displayed on the liquid crystal display 4. However, the overhead view image may be displayed on the liquid crystal display 4 simultaneously with the bird's-eye view image 40. For example, the screen of the liquid crystal display 4 can be divided into two left and right screens, the bird's-eye view image can be displayed on one screen, and the overhead view image can be displayed on the other screen. Then, the expected course image 51 may be similarly superimposed and displayed on the overhead view image displayed on the liquid crystal display 4. Further, as the scene image around the vehicle 2, not a processed video but an original video captured by the front camera 6 or the rear camera 7 may be displayed on the liquid crystal display 4, and the expected course image 51 may be superimposed on the video.

Furthermore, the scene around the vehicle 2 displayed on the liquid crystal display 4 may be a virtual scene image (for example, a three-dimensional map image) in which the periphery of the vehicle 2 is reproduced by computer graphics (CG) instead of the captured image captured by the camera. For example, a three-dimensional map image around the current position is acquired or generated and displayed on the liquid crystal display 4, and the expected course image 51 is displayed on the displayed three-dimensional map image. Even in this case, a similar effect is obtained.

In addition, in the present embodiment, in a case where steering operation for avoiding an obstacle is performed, the display form of the expected course image 51 is changed (S9, S10). However, as automated driving support for avoiding an obstacle, avoidance by braking operation (deceleration) is also conceivable in addition to avoidance by steering operation. Therefore, the display form of the expected course image 51 may be changed in a case where braking operation for avoiding an obstacle is performed. Furthermore, the display form of the expected course image 51 may be similarly changed not only when steering operation or braking operation is performed but also when other vehicle operation for avoiding an obstacle is performed.

Further, in the present embodiment, it is assumed that the bird's-eye view image 40 illustrated in Fig. 9 or 12 is displayed during traveling with automated driving support, but the bird's-eye view image 40 illustrated in Fig. 9 or 12 may be displayed even during traveling by manual driving. In this case, in a case where steering operation or braking operation for avoiding an obstacle is performed by manual driving, the display form of the expected course image 51 is changed (S9, S10).

In addition, the execution order of the respective steps of the driving support processing program illustrated in Fig. 3 is an example, and the execution order can be changed as appropriate. For example, although the expected course image 51 is generated in S5 after generation of the vehicle periphery image in S2, the vehicle periphery image may be generated after generation of the expected course image 51. Some steps included in the driving support processing program can be omitted, and for example, S8 and S10 may be omitted.

Further, in the present embodiment, the description has been given assuming that the display form of the expected course image 51 is changed (S9, S10) at the same time as the driving operation under automatic control for avoiding approach to the obstacle or the dividing line is performed. However, the display form may be changed on condition that the driving operation under automatic control for avoiding approach to the obstacle or the dividing line is performed and the steering angle of the vehicle 2 becomes equal to or larger than a threshold. Alternatively, the display form may be changed on condition that driving operation under automatic control for avoiding approach to an obstacle or a dividing line has been performed and a predetermined time elapses after the driving operation has been performed, the display form may be changed on condition that steering operation at a threshold speed or more is performed, or the display form may be changed on condition that the vehicle body of the vehicle 2 changes the direction by predetermined degrees or more.

### [Supplement]

The foregoing embodiment also illustrates the following disclosure. In the following description, names and expressions of corresponding configurations in the embodiment and reference numerals used in the drawings are added in parentheses for reference. However, the components of each disclosure are not limited to this supplement.

### (Disclosure A)

The driving support device (1) according to Claim 1, providing, by voice, notification that driving operation under the automatic control for avoiding approach to the obstacle (55, 56) or the dividing line has been performed, in addition to changing the display form of the expected course image (51).

According to this, it is possible to allow the user to intuitively grasp that the driving operation under the automatic control for avoiding the obstacle or the dividing line has been performed by the auditory sense in addition to the visual sense.

### (Disclosure B)

The driving support device (1) according to Claim 1, changing display forms on both sides of the expected course image (51) in a case where the obstacles (55, 56) or the dividing lines which are targets for the driving operation under the automatic control are located on both sides of the vehicle (2).

According to this, in a case where there are obstacles or dividing lines to be avoided on both left and right sides of the vehicle, it is possible to notify the user that the driving support device appropriately recognizes the obstacles or dividing lines and performs the automatic control, and it is possible to give more security to the user.

### (Disclosure C)

The driving support device (1) according to Claim 1, in which the vehicle periphery image (40) is an image captured by the imaging device (6, 7, 8A, 8B) included in the vehicle (2) or is an image obtained by viewpoint transformation and synthesis of the captured images.

According to this, it is possible to display a vehicle periphery image that accurately reflects the surrounding environment of the vehicle including the region that is the blind spot from the driver, and the ease of understanding the content of the automatic control is improved.

### (Disclosure D)

The driving support device (1) according to Claim 1, displaying, on the display device (4), a vehicle periphery overhead view image in which the periphery of the vehicle (2) is displayed as viewed downward from the sky, simultaneously with the vehicle periphery image (40),
in which the expected course image (51) is also displayed on the vehicle periphery overhead view image.

According to this, the positional relationship between the own vehicle and the obstacle can be easily grasped, and the content of the automatic control can be easily intuitively understood.

### (Disclosure E)

The driving support device according to Claim 2, in which the appearance shape of the expected course image (51) is changed stepwise when the appearance shape of the expected course image (51) is changed.

According to this, it is possible not only to make the user intuitively feel that the own vehicle is protected by the driving support device, but also to give the user a sense of security as if the own vehicle is protected by a hidden wall even before the appearance shape is changed.

### (Disclosure F)

The driving support device (1) according to Claim 1, in which the display form is changed at a timing when the driving operation under the automatic control for avoiding approach to the obstacle (55, 56) or the dividing line in the periphery of the vehicle (2) is performed and a steering angle of the vehicle (2) becomes equal to or larger than a threshold.

According to this, since the condition that the display form of the expected course image is changed includes a condition that the steering angle is equal to or larger than the threshold, it is possible to prevent the user from being even more confused by the continuous occurrence of a change in the display form when there are a plurality of obstacles to be avoided.

### (Disclosure G)

The driving support device (1) according to Claim 1, in which the expected course image (51) indicates either an expected course of the vehicle (2) in a case where the vehicle (2) moves while maintaining a steering angle of the vehicle (2) at a display time point, or an expected course of the vehicle (2) in a case where the vehicle (2) moves according to the automatic control.

According to this, the expected course image can display a course in which the own vehicle is expected to travel, and it is possible to notify the user of the safety of the driving operation under the automatic control.

### (Disclosure H)

The driving support device (1) according to Claim 1,
in which the expected course image (51) is an image of a line segment arranged along a course of the vehicle (2) and having a width equal to or larger than a vehicle width of the vehicle (2), and
in a case where a display form of the expected course image (51) is changed, the display form is changed for at least a region having a predetermined width from an end close to the obstacle (55, 56) or the dividing line to be avoided in the expected course image (51).

According to this, the user can grasp the expected course through which the vehicle will pass at a glance, and convenience is improved.

### (Disclosure I)

The driving support device (1) according to Claim 1,
in which the expected course image (51) is an image of two line segments arranged along a course of the vehicle (2) and corresponding to left and right ends of the vehicle (2), respectively, and
in a case where a display form of the expected course image (51) is changed, the display form is changed for at least one of the two line segments, the one of the two line segments being located on a side close to the obstacle (55, 56) or the dividing line to be avoided in the expected course image (51).

According to this, both ends of the expected course of the vehicle are clearly expressed, so that the user can clearly recognize the expected course.

## Claims

1. A driving support device (1) performing automatic control on at least part of driving operation of a vehicle (2), the driving support device (1)
displaying, on a display device (4), a vehicle periphery image (40) indicating a periphery of the vehicle (2) and an expected course image (51) indicating an expected future course of the vehicle (2) in the vehicle periphery image (40), and
changing, in association with driving operation under the automatic control for avoiding approach to an obstacle (55, 56) or a dividing line in the periphery of the vehicle (2), a display form on at least a side close to the obstacle (55, 56) or the dividing line to be avoided in the expected course image (51).

2. The driving support device (1) according to Claim 1, wherein changing a display form of the expected course image (51) means changing an appearance shape of the expected course image (51) so as to increase a height of at least part of an area on the side close to the obstacle (55, 56) or the dividing line in the expected course image (51).

3. The driving support device (1) according to Claim 1 or 2, wherein changing a display form of the expected course image (51) means changing a display color on the side close to the obstacle (55, 56) or the dividing line in the expected course image (51).

4. The driving support device (1) according to Claim 1 or 2, wherein changing a display form of the expected course image (51) means displaying the side close to the obstacle (55, 56) or the dividing line in the expected course image (51) in a blinking manner.
